# EUROPEAN PATENT APPLICATION

(11) **EP 3 285 243 A1**
(43) Date of publication of application: **21.02.2018**
(21) Application number: 16465526.8
(22) Date of filing: 17.08.2016
(51) Int. Cl.: G08G 1/16, G06K 9/00

(54) **METHOD FOR DETERMINING A COURSE OF A ROAD, DRIVER ASSISTANCE SYSTEM AND VEHICLE**

(71) Applicant: Continental Automotive GmbH, 30165 Hannover (DE)
(72) Inventor: Dumitrescu, Florin, 1900 Timisoara (RO)
(74) Representative: Reuter, Andreas

(57) **Abstract**

The invention provides a method for determining a course (C) of a road (R) for a vehicle (V) based on a road model of said road (R). At least one sensor (S) of the vehicle (V) captures (S1) structures (x1 to x17) extending along the road (R). Orientations of the captured structures (x1 to x17) are determined (S2). The captured structures (x1 to x17) are classified (S3) into groups (G1 to G6), based on the determined orientations of the captured structures (x1 to x17). Potential road courses (C1 to C6) of the road (R) are computed (S4) for each group (G1 to G6) of structures (x1 to x17). The road model is updated (S5) based on the computed potential road courses (C1 to C6). The course (C) of the road (R) is computed (S6), based on the updated road model of said road (R).

## Description

The invention relates to a method for determining a course of a road for a vehicle, a driver assistance system for a vehicle, and a vehicle.

Lane keeping assistance systems or systems for lane departure prevention require a precise knowledge of the course of the road. Document US 2013/173232 A1 proposes to identify structures that are parallel to the road and to determine the course of the road on the basis of tangential directions of the parallel structures.

It may happen that structures are classified as "parallel" which are in reality not parallel to the road. In this case, the determined course of the road might deviate from the actual course of the road. Therefore, it is an object of the present invention to determine the course of the road with a higher precision.

In accordance with the invention, a method for determining a course of a road for a vehicle as recited in claim 1 is provided. Further, a driver assistance system for a vehicle with the features as recited in claim 12 and a vehicle as recited in claim 15 are provided. Various preferred features of the invention are recited in the dependent claims.

According to one aspect, therefore, the invention provides a method for determining a course of a road for a vehicle based on a road model of said road. Structures extending along the road are captured by at least one sensor of the vehicle. Orientations of the captured structures are determined. The captured structures are classified into groups, based on the determined orientations of the captured structures. Potential road courses of the road are computed for each group of structures and the road model is updated based on the computed potential road courses. The course of the road is computed based on the updated road model of said road.

For instance, the vehicle can be a car, a truck, an aircraft or a boat.

The orientations of the captured structures may comprise the specific locations and the directions or the specific form of the structures with respect to the vehicle or with respect to the road. The orientations can for instance be determined based on a camera image which may be transformed into a top-view perspective.

The road model preferably comprises at least one parameter which is updated based on the computed potential road courses.

According to a further aspect, the invention provides a driver assistance system for a vehicle, which comprises at least one sensor of the vehicle, which is adapted to capture structures extending along the road. The driver assistance system further comprises a computation device, which is adapted to determine orientations of the captured structures. The computation device is further adapted to classify the captured structures into groups, based on the determined orientations of the captured structures, and to compute potential road courses of the road for each group of structures. The computation device is further adapted to update the road model based on the computed potential road courses, and to compute the course of the road based on the updated road model of the road.

According to a further aspect, the invention provides a vehicle with a driver assistance system.

According to the invention, the captured structures are classified into groups, which allows to sort them, for instance according to their spatial relationship or to their structural similarity. Since the structures within one group are related to one another, the respective potential road course which is computed based on the group of structures can be obtained with a higher precision and a smaller statistical error. Therefore, the method allows computing the course of the road with an increased accuracy.

According to a further embodiment of the invention, captured structures are classified into the same group of structures if their orientations match. For instance, orientations can be considered to match if their slopes with respect to a predetermined axis are identical or if the difference between their slopes is smaller than a predetermined value. For instance, structures which are essentially parallel to each other can be classified into the same group. These structures usually refer to spatially related entities which are located in the same section of the road.

According to a preferred embodiment of the method, captured structures are combined into a single structure if they overlap at least partially and if their orientations at the overlap match. In this way, larger structures can be formed by piecing together individual structures. Coherent information can be generated and the computational effort is reduced. Preferably, structures are only combined into a single structure if their recognized types are identical.

According to a preferred embodiment of the method, classifying the captured structures into groups is further performed based on recognized types of the structures. The types of the structures are preferably automatically recognized.

According to a further embodiment of the invention, the types of the structures comprise at least one of the group comprising boundaries of the road, markings of the road, curves of the road, buildings located along the road, vegetation located along the road, such as trees or hedges, and guardrails along the road.

Preferably, computed potential road courses which are computed for groups with different types of structures can be weighted differently for updating the road model. Thus, structures which have higher probability to correspond to the actual course of the road, for instance markings of the road, can be given a higher weight.

According to a further embodiment of the method, the step of updating the road model comprises selecting computed potential road courses which are consistent with a current course of the road. Preferably, two courses of the road are considered to be consistent if a deviation between them lies within a predetermined range, for instance, if all parameters of the respective road models deviate from each other by less than respective predetermined values.

According to a further embodiment of the method, alternative courses of the road are computed based on the computed potential road courses which are not consistent with the current course of the road. This method allows the determination of road crossings.

According to a further embodiment of the method, the road model is updated using a Kalman filter.

According to another embodiment of the method, the road model is based on a clothoid model, a circular-arc model, a double-clothoid model or a spline model.

According to a further embodiment of the method, a horizon line is computed based on the groups of structures. Preferably, the horizon line is computed by extrapolating the orientations of the structures to generate a common intersection point which is preferably identified as a vanishing point of the road. The horizon line is obtained as a horizontal line intersecting the vanishing point of the road. The horizon line can also be computed by determining intersection points on the camera image of any two structures extending along the road which are determined to be parallel to each other. The horizon line is determined by interpolating these intersection points.

According to a preferred embodiment of the method, at least one driving function of the vehicle is controlled, based on the computed course of the road. For instance, an acceleration, a speed or a steering wheel angle of the vehicle can be controlled based on the computed course of the road. The vehicle can be semi-automatically or automatically controlled based on the computed course of the road.

Preferably, each method step can be performed automatically by a driver assistance system of the vehicle.

According to another embodiment of the driver assistance system, the at least one sensor of the vehicle comprises at least one out of the group of a camera sensor, a radar sensor, a lidar sensor, and an infrared sensor.

According to another embodiment, the driver assistance system comprises a controlling unit which is adapted to control at least one driving function of the vehicle based on the computed course of the road.

For a more complete understanding of the invention and the advantages thereof, exemplary embodiments of the invention are explained in more detail in the following description with reference to the accompanying drawing figures, in which like reference characters designate like parts and in which:
Fig. 1 shows a flowchart of a method for determining a course of a road for a vehicle according to an embodiment of the invention;
Fig. 2 shows a top view on a schematic road scenario illustrating the method;
Fig. 3 shows a block diagram of a driver assistance system according to an embodiment of the invention; and
Fig. 4 shows a block diagram of a vehicle according to the invention.

The accompanying drawings are included to provide a further understanding of the present invention and are incorporated in and constitute a part of this specification. The drawings illustrate particular embodiments of the invention and together with the description serve to explain the principles of the invention. Other embodiments of the invention and many of the attendant advantages of the invention will be readily appreciated as they become better understood with reference to the following detailed description.

It will be appreciated that common and well understood elements that may be useful or necessary in a commercially feasible embodiment are not necessarily depicted in order to facilitate a more abstracted view of the embodiments. It will further be appreciated that certain actions and/or steps in an embodiment of a method may be described or depicted in a particular order of occurrences while those skilled in the art will understand that such specificity with respect to sequence is not actually required. It will also be understood that the terms and expressions used in the present specification have the ordinary meaning as is accorded to such terms and expressions with respect to their corresponding respective areas of inquiry and study, except where specific meanings have otherwise been set forth herein.

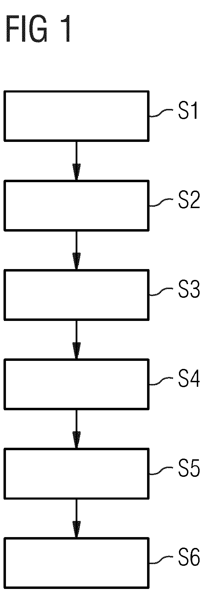

Figure 1 shows a flowchart illustrating an embodiment of a method for determining a course of a road for a vehicle based on a road model of the road. The road model can be based on a clothoid model, a circular-arc model, a double-clothoid model or a spline model and can be characterized by at least one parameter. For instance, the course of the road can be modeled by a third order polynomial.

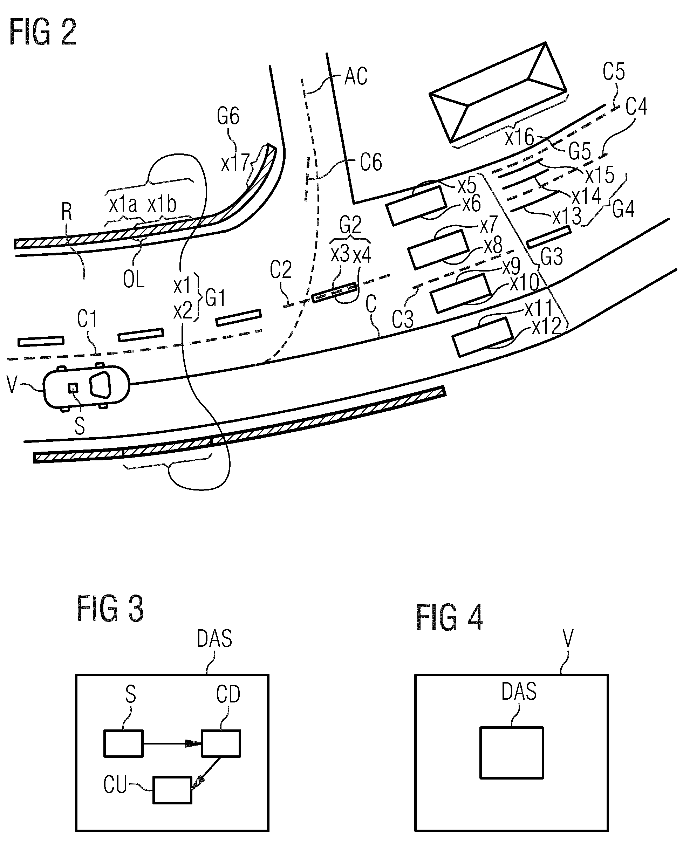

The method is explained in more detail in the following with reference to the schematic scenario illustrated in Figure 2.

Figure 2 shows a vehicle V which is driving on a road R. The vehicle V comprises a plurality of sensors S, such as camera sensors, radar sensors, lidar sensors and infrared sensors.

In a first step S1, structures x1 to x17 extending along the road R are captured by the sensor S of the vehicle V. The structures comprise sections x1a, x1b, x2, x17 of guardrails along the road R, markings x3 to x12 of the road R, grooves or wheel ruts x13 to x15 extending along the road R and a front side x16 of a building which extends along the road R.

In order to capture structures extending along the road R, first, all structures can be extracted from sensor data of the sensors S. For instance, based on a camera image, structures in the neighborhood of the vehicle V can be identified based on edge detection methods. Then, those structures which extend along the road R can be selected. In order to determine whether a certain structure extends along the road R, a type of the structure can be identified. The type of the structure allows determining whether the structure extends along the road R or not. For instance, a database can comprise information whether structures extend along the road R. If the captured structures do not extend along the road R, they can be rejected for the following method steps. As an example, a structure of a type "curb of the road" is identified based on a camera image using image recognition methods. By looking up the database it is determined that a structure of the type "curb of the road" extends along the road R. Therefore, the identified structure is classified as a structure extending along the road R. If a structure of a type "car" or of a type "road sign" is detected, it is determined based on the database that the structure does not extend along the road R and the structure is rejected.

In a further step S2, orientations of the captured structures are determined. For instance, the location, the slope with respect to a predetermined axis, the specific shape which can be modelled by a certain polynomial or mathematical function, or the angular orientation with respect to the vehicle V or the road R can be determined.

If captured structures overlap at least partially, the captured structures can be combined into a single structure. Preferably, they are combined only if their orientations and/or shapes at the overlap match. In the situation depicted in Figure 2, it is determined that the sections x1a and x1b of the guardrail along the road R overlap and their orientations and shapes at the overlap OL matches. The sections x1a and x1b are combined into a single structure corresponding to a section x1 of the guardrail along the road.

In a further step S3, the captured structures are classified into groups G1 to G6, based on the determined orientations of the captured structures x1 to x17.

Preferably, captured structures x1 to x17 are classified into the same group G1 to G6 of structures x1 to x17, if their orientations match. For instance, structures x1 to x17 can be classified into the same group G1 to G6, if the respective deviations of their slopes are smaller than a predetermined value.

Preferably, only captured structures which have the same recognized type of the structure x1 to x17 are classified into the same group G1 to G6.

In the scenario illustrated in Figure 2, the sections x1, x2 of the guardrails along the road R are classified into a first group G1, the markings x3, x4 of the road R are classified into a second group G2, the markings x5 to x12, corresponding to a pedestrian crossing are classified into a third group G3, the ruts x13 to x15 are classified into a fourth group G4, the front side x16 of the building located along the road R is classified into a fifth group G5, and the section x17 of the guardrail along the road R is classified into a sixth group G6.

Preferably, structures located on different sides of the road R can be classified into a single group. Each group preferably comprises two members but can also comprise one member, three or more members. According to a further embodiment, only groups G1 to G4 with more than one member are selected for the following method steps while groups G5, G6 having only one member are rejected and not used for the following method steps.

For each of the groups G1 to G6, potential road courses C1 to C6 of the road R are computed in a further step S4. For instance, a respective potential road course C1 to C6 can be calculated using a clothoid model, a circular-arc model, a double-clothoid model or a spline model. Preferably, parameters of the used model are fitted in such a way that a potential road course C1 to C6, which is computed based on the road model, extends between two of the captured structures x1 to x17 within one group G1 to G6. In the scenario of Figure 2, for each group G1 to G6, a respective road course C1 to C6 is computed.

According to a further embodiment, the potential road courses C1 to C6 are determined based on the orientation of the captured structures x1 to x17 within the group G1 to G6. As an example, the slopes of the captured structures x1 to x17 within one group G1 to G6 can be averaged to compute a slope of the respective potential road course C1 to C6.

In a further method step S5, the road model is updated, based on the computed potential road courses C1 to C6. The parameters of the road model are continuously updated based on the computed potential road courses.

According to an embodiment, the road model can be updated by averaging over the computed potential road courses and by adjusting the parameters of the road model in order to fit the averaged potential road course.

According to a further embodiment, respective weights are associated with each potential road course C1 to C6, based on the type of the structures x1 to x17 within the group G1 to G6 of structures x1 to x17.

According to a further embodiment, the road model is obtained by piecing together different sections which are described by respective parameters and mathematical functions. The parameters for each section of the road R are updated based on potential road courses C1 to C6 which have a distance to the sections smaller than a predetermined value.

According to a further embodiment, weights of potential road courses C1 to C6 depend on the distance of the respective captured structures x1 to x17 from the vehicle V. Preferably, the larger the distance, the smaller the weight of the potential road course C1 to C6.

According to a preferred embodiment, computed potential road courses C1 to C6 are selected which are consistent with a current course C of the road R, and the road model is updated based only on the consistent potential road courses C1 to C6. For instance, if a deviation between a slope of a potential road course C1 to C6 and the current slope of the course C of the road is higher than a predetermined value, the potential road course C1 to C6 is rejected, which is for instance the case for the sixth road course C6 of Figure 2. Preferably, an alternative course AC of the road R is computed based on the computed potential road course C6 which is not consistent with the current course C of the road R.

The update of the road model is preferably performed using a Kalman filter.

According to a further embodiment, a horizon line is computed based on the groups G1 to G6 of structures x1 to x17.

Preferably, at least one driving function of the vehicle V is controlled based on the computed course C of the road R.

Figure 3 illustrates a block diagram of a driver assistance system DAS according to an embodiment of the invention. The driver assistance system DAS comprises at least one sensor S of the vehicle V which is adapted to capture structures x1 to x17 extending along the road R. The at least one sensor S can comprise at least one camera sensor, radar sensor, lidar sensor or infrared sensor. The driver assistance system DAS further comprises a computation device CD, which is adapted to determine the orientations of the captured structures x1 to x17.The computation device CD is further adapted to classify the captured structures x1 to x17 into groups G1 to G6, based on the determined orientations of the captured structures x1 to x17.The computation device CD computes potential road courses C1 to C6 of the road R for each group G1 of G6 of structures x1 to x17, updates the road model based on the computed potential road courses C1 to C6, and computes the course C of the road R, based on the updated road model of the road R. In particular, the computation device CD can be adapted to perform any of the method steps outlined above.

The driver assistance system DAS further comprises a controlling unit CU, which is adapted to receive the updated road model of the road R and is adapted to control at least one driving function of the vehicle V based on the computed course C of the road R. For instance, the driver assistance system can accelerate, decelerate or steer the vehicle V based on the computed course C of the road R.

Figure 4 shows a block diagram of a vehicle V comprising a driver assistance system DAS as disclosed in the above embodiments.

Although specific embodiments of the invention have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

In this document, the terms "comprise", "comprising", "include", "including", "contain", "containing", "have", "having", and any variations thereof, are intended to be understood in an inclusive (i.e. non-exclusive) sense, such that the process, method, device, apparatus or system described herein is not limited to those features or parts or elements or steps recited but may include other elements, features, parts or steps not expressly listed or inherent to such process, method, article, or apparatus. Furthermore, the terms "a" and "an" used herein are intended to be understood as meaning one or more unless explicitly stated otherwise. Moreover, the terms "first", "second", "third", etc. are used merely as labels, and are not intended to impose numerical requirements on or to establish a certain ranking of importance of their objects.

## Claims

1. A method for determining a course (C) of a road (R) for a vehicle (V) based on a road model of said road (R), comprising the steps:
capturing (S1) structures (x1 to x17) extending along the road (R) by at least one sensor (S) of the vehicle (V);
determining (S2) orientations of the captured structures (x1 to x17);
classifying (S3) the captured structures (x1 to x17) into groups (G1 to G6), based on the determined orientations of the captured structures (x1 to x17);
computing (S4) potential road courses (C1 to C6) of the road (R) for each group (G1 to G6) of structures (x1 to x17);
updating (S5) the road model based on the computed potential road courses (C1 to C6); and
computing (S6) the course (C) of the road (R) based on the updated road model of said road (R).

2. The method according to claim 1, wherein captured structures (x1 to x17) are classified into the same group (G1 to G6) of structures (x1 to x17) if their orientations match.

3. The method according to claim 1 or 2, wherein captured structures (x1a, x1b) are combined into a single structure (x1) if they overlap at least partially and if their orientations at the overlap (OL) match.

4. The method according to any of the preceding claims, wherein classifying the captured structures (x1 to x17) into groups (G1 to G6) is further performed based on recognized types of the structures (x1 to x17).

5. The method according to claim 4, wherein the types of the structures (x1 to x17) comprise at least one of the group comprising boundaries of the road (R), markings of the road (R), curbs of the road (R), buildings located along the road (R), vegetation located along the road (R) and guardrails along the road (R).

6. The method according to any of the preceding claims, wherein for updating the road model, computed potential road courses (C1 to C6) are selected which are consistent with a current course (C) of the road (R).

7. The method according to claim 6, wherein alternative courses (AC) of the road (R) are computed based on the computed potential road courses (C6) which are not consistent with the current course (C) of the road (R).

8. The method according to any of the preceding claims, wherein the road model is updated using a Kalman filter.

9. The method according to any of the preceding claims, wherein the road model is based on a clothoid model, a circular-arc model, a double-clothoid model or a spline model.

10. The method according to any of the preceding claims, wherein a horizon line is computed based on the groups (G1 to G6) of structures (x1 to x17).

11. The method according to any of the preceding claims, wherein at least one driving function of the vehicle (V) is controlled, based on the computed course (C) of the road (R).

12. A driver assistance system (DAS) for a vehicle (V), comprising:
at least one sensor (S) of the vehicle (V), which is adapted to capture structures (x1 to x17) extending along the road (R); and
a computation device (CD), which is adapted to:
- determine orientations of the captured structures (x1 to x17),
- classify the captured structures (x1 to x17) into groups (G1 to G6), based on the determined orientations of the captured structures (x1 to xl7),
- compute potential road courses (C1 to C6) of the road (R) for each group (G1 to G6) of structures (x1 to x17),
- update the road model, based on the computed potential road courses (C1 to C6), and
- compute the course (C) of the road (R), based on the updated road model of said road (R).

13. The driver assistance system (DAS) according to claim 12, wherein the at least one sensor (S) of the vehicle (V) comprises at least one of the group of a camera sensor, a radar sensor, a Lidar sensor, and an infrared sensor.

14. The driver assistance system (DAS) according to claim 12 or 13, comprising a controlling unit (CU), which is adapted to control at least one driving function of the vehicle (V) based on the computed course (C) of the road (R).

15. A vehicle (V) with a driver assistance system (DAS) according to any of claims 12 to 14.
